(19) Europäisches Patentamt
European Patent Office
Office européen des brevets

(11) Veröffentlichungsnummer: **0 016 933 B1**

(12) # EUROPÄISCHE PATENTSCHRIFT

(45) Veröffentlichungstag der Patentschrift: **12.05.82**

(51) Int. Cl.³: **D 06 P 1/30**, C 09 B 67/00, C 09 B 49/00

(21) Anmeldenummer: **80100566.1**

(22) Anmeldetag: **04.02.80**

(54) **Verfahren zum Färben und Bedrucken mit Schwefelfarbstoffen und Verfahren zur Herstellung färbefertiger Schwefelfarbstoffzubereitungen, sowie nach dem Herstellungsverfahren erhaltene Schwefelfarbstoffzubereitung.**

(30) Priorität: **24.03.79 DE 2911720**

(43) Veröffentlichungstag der Anmeldung: **15.10.80 Patentblatt 80/21**

(45) Bekanntmachung des Hinweises auf die Patenterteilung: **12.05.82 Patentblatt 82/19**

(84) Benannte Vertragsstaaten: **BE DE FR GB IT NL**

(56) Entgegenhaltungen:
**DE-C-604 468**
**DE-C-743 566**
**FR-A-1 393 050**
**US-A-2 174 496**

(73) Patentinhaber: **CASSELLA Aktiengesellschaft, Hanauer Landstrasse 526, D-6000 Frankfurt am Main 61 (DE)**

(72) Erfinder: **Held, Christian, Dr., Lauterbacher Strasse 10, D-6000 Frankfurt am Main 61 (DE)**
Erfinder: **Mix, Konrad, Dr., Fuldaer Strasse 24, D-6000 Frankfurt am Main 61 (DE)**
Erfinder: **Dickmanns, Heinz, Lauterbacher Strasse 8, D-6000 Frankfurt am Main 61 (DE)**
Erfinder: **Krusche, Erwin, Lauterbacher Strasse 6A, D-6000 Frankfurt am Main 61 (DE)**

(74) Vertreter: **Urbach, Hans-Georg, Dr. et al, Hanauer Landstrasse 526, D-6000 Frankfurt am Main 61 (DE)**

EP 0 016 933 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zum Färben und Bedrucken mit Schwefelfarbstoffen und Verfahren zur Herstellung färbefertiger Schwefelfarbstoffzubereitungen sowie nach dem Herstellungsverfahren erhaltene Schwefelfarbstoffzubereitung

Schwefelfarbstoffe müssen zum Färben und Bedrucken zunächst durch Reduktion in Lösung gebracht werden. Die auch als Leuko-Farbstoffe bezeichneten Reduktionsprodukte ziehen auf cellulosische Fasern auf und werden dann durch Oxydation wieder in die unlöslichen Schwefelfarbstoffe zurückverwandelt. Für die Reduktion der Schwefelfarbstoffe sind z. B. Natriumsulfid, Natriumsulfhydrat (Natriumhydrogensulfid), Ammoniumsulfid, Hydrosulfit (Dithionit), Hydrosulfit-Aldehyd-Verbindungen und Glucose bekannt. Im praktischen Färbereibetrieb werden vorzugsweise Natriumsulfid oder Natriumsulfhydrat verwendet. Hydrosulfit und oxymethansulfinsaures Natrium zerstören durch Überreduktion eine Reihe von Schwefelfarbstoffen und sind daher nur mit Einschränkungen, vor allem für sogenannte Schwefelküpenfarbstoffe, geeignet.

Glucose und andere Zucker, wie Frucktose, Invertzucker, reduzieren Schwefelfarbstoffe erst bei höheren Temperaturen, so daß eine optimale Farbausbeute nur über 95° C möglich ist. Da nicht in allen vorhandenen Färbeapparaturen derartige Temperaturen erreichbar sind, sind auch Glucose und andere Zucker nicht uneingeschränkt als Reduktionsmittel für Schwefelfarbstoffe geeignet. Beim derzeitigen Stand der Färbereitechnik steht kein dem Natriumsulfid bzw. Natriumsulfhydrat über die ganze Anwendungsbreite gleichwertiges Reduktionsmittel für Schwefelfarbstoffe zur Verfügung. Die weitere Verwendung von sulfidhaltigen Reduktionsmitteln wird jedoch bei den strenger werdenden Bestrebungen zum Schutze der Umwelt in Frage gestellt. Die zu erwartenden Gesetze zur Reinhaltung von Wasser und Luft schließen in vielen Fällen den Gebrauch von Alkalisulfid und Alkalisulfhydrat sogar aus.

Es ist auch ein Verfahren zum Färben und Drucken mit Schwefelfarbstoffen bekannt (DE-C-743 566), bei dem Mercaptoverbindungen als Reduktionsmittel verwandt werden. Neben Mercaptoverbindungen können dabei auch Disulfidverbindungen bzw. Verbindungen eingesetzt werden, die unter den Färbe- oder Druckbedingungen in Mercaptoverbindungen übergehen. Als geeignete Verbindungen werden erwähnt: die Natriumsalze der Thioglykolsäure, Dithioglykolsäure und Thiosalicylsäure sowie Pseudosulfhydantoin (Kondensationsverbindung aus Thioharnstoff und Monochloressigsäure), die Kondensationsverbindungen aus Aceton und Thioglykolsäure und aus Benzaldehyd und thioglykolsaurem Natrium. Die genannten Verbindungen reduzieren Schwefelfarbstoffe praktisch in gleicher Weise wie Alkalisulfid, setzen aber bei der Verküpung in alkalischer Flotte mit Ausnahme der technisch wertlosen Thiosalicylsäure Sulfid frei, wie in der DE-PS 743 566 am Beispiel der Thioglykolsäure bzw. deren entsprechender Disulfidverbindung angegeben wird:

$$4\,HOOC-CH_2SH \xrightarrow[-H_2O]{+OH'} 2\,HOOC-CH_2-S-S-CH_2-COOH$$

$$2\,HOOC-CH_2-S-S-CH_2-COOH \xrightarrow{+H_2O} 2\,HOOC-CH_2SH + 2\,HOOC-CH_2-SOH$$

$$2\,HOOC-CH_2SOH \longrightarrow HOOC-COOH + HOOC-CH_2SH + H_2S$$

Aus 4 Mol Mercapto bzw. 2 Mol Disulfid werden so 3 Mol Mercaptan und 1 Mol Schwefelwasserstoff gebildet, wobei das entstandene Mercaptan von neuem in die Reaktion bis zur völligen Umwandlung in Schwefelwasserstoff eintritt.

Das bedeutet, daß bei der Verwendung der in der DE-C-743 566 angegebenen Mercapto- oder Disulfidverbindungen Schwefelwasserstoff gebildet wird, so daß insoweit kein Vorteil gegenüber der Verwendung von sulfidischen Reduktionsmitteln vorhanden ist. Der Vorteil in der Verwendung der angegebenen Mercapto- oder Disulfidverbindungen wird auch nur darin gesehen, daß einerseits im Vergleich zu Schwefelnatrium Verküpungsmöglichkeiten im schwächer alkalischen Bereich geboten werden und andererseits gegenüber Natriumformaldehydsulfoxylat oder Hydrosulfit eine mildere Verküpung ohne Überreduktion möglich ist. Ökologische Gesichtspunkte im Zusammenhang mit Reduktionsmitteln für Schwefelfarbstoffe, wie z. B. biologische Abbaubarkeit, Toxizität oder Belastung von Wasser und Luft werden in der DE-C-743 566 nicht in die Betrachtung einbezogen.

Es wurde nun gefunden, daß bei der Verwendung von Mercaptoverbindungen als Reduktionsmittel für Schwefelfarbstoffe dann kein Schwefelwasserstoff auftritt, wenn eine Verbindung der Formel

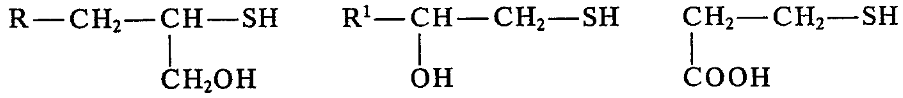

I II III

worin R = –H oder –OH und $R^1$ = H, $-CH_3$ oder $-CH_2OH$ bedeuten, oder ihres Alkalisalzes verwendet wird.

Die Erfindung betrifft demgemäß ein Verfahren zum Färben und Bedrucken mit Schwefelfarbstoffen unter Verwendung von Mercaptoverbindungen als Reduktionsmittel, das dadurch gekennzeichnet ist, daß eine Verbindung der vorstehend angegebenen Formeln I, II oder III oder ihres Alkalisalzes als Reduktionsmittel verwendet wird. Die Erfindung betrifft auch ein Verfahren zur Herstellung flüssiger Schwefelfarbstoffpräparate, bei dem die Schwefelfarbstoffe mit einer Verbindung der Formeln I, II oder III behandelt werden, sowie die so hergestellten Schwefelfarbstoffpräparate.

Die Verbindungen der Formeln I, II und III, 2-Mercapto-1-propanol, 2-Mercapto-1,3-propandiol, β-Mercaptoäthanol, 3-Mercapto-2-propanol, 3-Mercapto-1,2-propandiol (Thioglyzerin), β-Mercaptopropionsäure, sind bekannt. Sofern von ihnen Alkalisalze existieren, können sie auch in Form dieser Salze eingesetzt werden. Die Verbindungen bzw. ihre Salze reduzieren Schwefelfarbstoffe in gleicher Weise wie Alkalisulfid. Es werden Färbungen gleicher Stärke und gleicher Echtheiten erhalten. Eine Überreduktion wie bei Hydrosulfit oder oxymethansulfinsaurem Natrium tritt nicht ein. Die Färbemöglichkeit erstreckt sich über einen pH-Bereich von 9 bis 14, ohne daß luftbelastender und geruchsbelästigender Schwefelwasserstoff frei wird. Ebenso ist im Färbereiabwasser auch nach schwachem Ansäuern praktisch kein Sulfid nachweisbar. Die Verbindungen der Formen I, II und III sind auch, im Gegensatz zu dem baktericiden Alkalisulfid, biologisch abbaubar.

Die zur Reduktion der Schwefelfarbstoffe erforderliche Menge der Verbindungen I, II oder III beträgt in Abhängigkeit von dem jeweiligen Farbstoff normalerweise das 0,2- bis 3fache des Farbstoffgewichtes. Auch Gemische von Verbindungen der Formeln I, II oder III oder ihrer Salze können als Reduktionsmittel für Schwefelfarbstoffe verwendet werden. Die genannten Reduktionsmittel können auch im Gemisch mit anderen, für Schwefelfarbstoffe wirksamen Reduktionsmitteln verwendet werden. Solche anderen Reduktionsmittel sind z. B. Natriumdithionit, Zucker, wie Glucose, Fructose und Invertzucker. Bei den Kombinationen mit verschiedenen Reduktionsmitteln sind oft synergistische Reduktionseffekte nachweisbar, insbesondere in Kombination mit β-Mercaptoäthanol ($R^1$=H in Formel II), das auch bei der Verwendung als Einzelreduktionsmittel bevorzugt wird. Die vorgenannten Reduktionsmittelkombinationen sind nur wenig toxisch, biologisch abbaubar und im Abwasser daher unbedenklich.

Die Färbungen werden wie üblich z. B. nach dem Klotz-Dämpf-Verfahren oder aus langer Flotte durchgeführt. Die Färbeflotte wird unter Zusatz der erfindungsgemäß zu verwendenden Reduktionsmittel hergestellt und der erforderliche pH-Wert von 9 bis 14, vorzugsweise 10,5 bis 12,5, im allgemeinen durch Zugabe von Natronlauge eingestellt.

Für das Färben und Bedrucken unter Verwendung der erfindungsgemäß zu verwendenden Reduktionsmittel können alle bekannten wasserunlöslichen und wasserlöslichen Schwefelfarbstoffe und alle bekannten Schwefelküpenfarbstoffe eingesetzt werden.

Beispiele für wasserunlösliche Schwefelfarbstoffe sind: Sulphur Yellow 9 C.I. 53 010, Sulphur Brown 15 C.I. 53 270, Sulphur Brown 26 C.I. 53 090, Sulphur Brown 20 C.I. 53 680, Sulphur Brown 10 C.I. 53 055, Sulphur Red 6 C.I. 53 720, Sulphur Red 12, Sulphur Black 1 C.I. 53 185, Sulphur Blue 11 C.I. 53 235, Sulphur Yellow 20, Sulphur Green 8 C.I. 53 175, Sulphur Brown C.I. 53 320, Sulphur Brown 38 C.I. 53 100, Sulphur Brown 16 C.I. 53 280.

Beispiele für wasserlösliche Schwefelfarbstoffe (Natriumsalze der Thioschwefelsäuren von Schwefelfarbstoffen) sind: Sol. Sulphur Blue 7 C.I. 53 441, Sol. Sulphur Brown 15 C.I. 53 271, Sol. Sulphur Yellow 2 C.I. 53 121, Sol. Sulphur Brown 10 C.I. 53 056, Sol. Sulphur Blue 7 C.I. 53 441, Sol. Sulphur Blue 10 C.I. 53 471, Sol. Sulphur Brown 16 C.I. 53 286, Sol. Sulphur Brown 51 C.I. 53 328, Sol. Sulphur Brown 60 C.I. 53 326, Sol. Sulphur Green 2 C.I. 53 572, Sol. Sulphur Brown 52 C.I. 53 321, Sol. Sulphur Green 9 C.I. 53 006, Sol. Sulphur Red 6 C.I. 53 723, Sol. Sulphur Brown 1 C.I. 53 001.

Beispiele für Schwefelküpenfarbstoffe sind: Vat Blue 43 C.I. 53 630, Vat Blue 42 C.I. 53 640, Sulphur Black 11 C.I. 53 290, Sulphur Black 6 C.I. 53 295, Sulphur Black 7 C.I. 53 300.

Die erfindungsgemäß zu verwendenden Reduktionsmittel eignen sich nicht nur zur Durchführung des Färbe- und Druckvorgangs mit Schwefel- und Schwefel-Küpen-Farbstoffen, sondern auch zur Herstellung färbefertiger flüssiger Farbstoffpräparationen der genannten Farbstoffe. Derartige färbefertige flüssige Farbstoffpräparationen sind unter Verwendung von Natriumsulfiden und Natriumhydrogensulfid als Reduktionsmittel aus der US-A-2 130 415 bekannt. Anstelle des toxischen Natriumsulfids und Hydrosulfids werden die erfindungsgemäß als Reduktionsmittel zu verwendenden Mercaptoverbindungen der Formeln I, II oder III oder ihre Salze, allein oder im Gemisch miteinander, gegebenenfalls auch im Gemisch mit anderen Reduktionsmitteln, wie Natriumdithionit und/oder Zucker zur Herstellung der färbefertigen flüssigen Farbstoffzubereitungen benutzt. Hierbei wird ein Schwefelfarbstoff (wasserlöslicher oder wasserunlöslicher Schwefelfarbstoff oder Schwefel-Küpen-Farbstoff oder ein Gemisch dieser Farbstoffe) mit einem erfindungsgemäß zu verwendenden Reduktionsmittel oder Reduktionsmittelgemisch im Gewichtsverhältnis 1 : (0,1 bis 2), vorzugsweise 1 : (0,2 bis 1) bei pH-Werten von 9 bis 14, vorzugsweise 10,5 bis 12,5, gegebenenfalls in Anwesenheit eines Dispergiermittels, so lange gerührt, bis der Schwefelfarbstoff vollständig reduziert worden ist. Normalerweise erfolgt diese Reduktion bei Temperaturen von 20 bis 180°C, vorzugsweise bei 40 bis 80°C. Zur Einstellung des pH-Wertes wird im allgemeinen Natronlauge benutzt. Nach der Abkühlung liegt der Schwefelfarbstoff in stabiler färbefertiger Form vor. Die Farbstoffkonzentration in der stabilen flüssigen Farbstoffzubereitung kann etwa 10 bis 45% betragen. Die stabilen färbefertigen

Farbstoffzubereitungen können durch einfaches Verdünnen der Färbeflotte beigemischt werden. Aus den Färbeflotten kann auch bei ungewolltem Zutritt von Säure vor oder nach Durchführung der Färbung kein giftiges Schwefelwasserstoffgas freigesetzt werden. Damit wird die Betriebssicherheit bei Verwendung der erfindungsgemäß zu verwendenden Verküpungsmittel beträchtlich erhöht und die Umweltbelastung verringert, ohne daß auf die Vorteile der leichteren Handhabung der flüssigen Farbstoffpräparation und des geringeren pH-Wertes verzichtet werden muß.

## Beispiel 1

34 g Sol. Sulphur Brown 15 C.I. 53 271, 72 g Sol. Sulphur Red 6 C.I. 53 723, 45 g Hydrosol-Orangebraun RR, 22 g Sol. Sulphur Black 1 C.I. 53 186 werden unter Rühren in 500 ml Wasser von 50°C eingestreut und gelöst. Danach werden 25 ml Natronlauge 38°Bé und 55 ml $\beta$-Mercaptoäthanol (ca. 47%ige wäßrige Lösung des Natriumsalzes) hinzugefügt und die Lösung mit kaltem Wasser auf 1000 ml aufgefüllt.

Die Lösung wird dann auf 25 bis 30°C erwärmt und mit ihr Baumwollsamt foulardiert. Der foulardierte Baumwollsamt wird 1 Minute bei 103°C gedämpft, kalt und warm (50°C) gespült und danach 2 Minuten in einem Oxydationsbad oxydiert, das 1,5 g/l Kaliumbichromat und 4 ml/l Essigsäure enthält und einen pH von 4 bis 5 besitzt. Abschließend wird heiß und kalt gespült. Es resultiert ein sehr tiefes Braun. Beim Färben, Spülen und sauren Oxydieren ist kein störender Geruch wahrnehmbar. Sulfid ist im Spülwasser nicht nachweisbar.

## Beispiel 2

60 g Hydron-Balu R Stabilosol flüssig (Vat Blue 43 C.I. 53 630) werden mit 500 ml kaltem Wasser verdünnt, nach Zusatz von 20 ml Natronlauge 38° Bé und 30 ml $\beta$-Mercaptoäthanol (ca. 47%ige wäßrige Lösung des Natriumsalzes) mit Wasser auf 1000 ml aufgefüllt. Mit dieser Lösung wird Baumwollgewebe bei 25 bis 30° C foulardiert und, wie unter Beispiel 1 beschrieben, fertiggestellt. Die erhaltene Färbung entspricht einer solchen, wie sie in üblicher Weise bei Verwendung von Natronlauge-Hydrosulfit resultiert.

## Beispiel 3

5 g Immedial-Carbon CBO konz. (Sulphur Black 1 C.I. 53 185) werden mit 100 ml Wasser, 5 ml Natronlauge 38° Bé und 5 ml $\beta$-Mercaptoäthanol (ca. 47%ige wäßrige Lösung des Natriumsalzes) aufgekocht und danach auf 250 ml mit Wasser aufgefüllt. Dieser Lösung werden 5 g Natriumsulfat zugesetzt. In der so hergestellten Färbeflotte werden 50 g Baumwollgewebe auf dem Laborjigger 60 Minuten lang bei 90°C gefärbt (Flottenverhältnis 1 : 5). Anschließend wird gespült und danach 15 Minuten lang bei 80°C mit einer Oxydationslösung oxydiert, die 1,5 g/l Kaliumbichromat und 4 ml/l Essigsäure 60%ig enthält. Nach abschließendem heißem Spülen erhält man ein Schwarz in üblicher Farbstärke von normalem Echtheitsniveau.

## Beispiel 4

1,5 g Immedial-Lichtbrillantgrün BBL (Sulphur Green 25) werden in 500 ml Wasser, dem vorher 3 ml Natronlauge 38° Bé und 3 ml $\beta$-Mercaptoäthanol (ca. 47%ige wäßrige Lösung des Natriumsalzes) zugesetzt werden, gelöst. In dieser Färbeflotte werden nach Zusatz von 10 g Natriumsulfat 20 g Baumwollgarn auf den Laborjigger 60 Minuten lang bei 90°C gefärbt (Flottenverhältnis 1 : 25). Anschließend wird gespült und danach 10 Minuten lang bei 80° mit einer Oxydationslösung oxydiert, die 1,5 g/l Kaliumbichromat und 4 ml/l Essigsäure 60%ig enthält. Nach abschließendem heißen Spülen erhält man eine normal tiefe und echte Färbung. Bei Verwendung von Hydrosulfit als Reduktionsmittel würde der Farbstoff durch Überreduktion zerstört.

## Beispiel 5

400 g Farbbase Sulphur Brown 51 C.I. 53 327, erhalten durch Schwefeln von Hexanitrodekacyclen nach dem Backverfahren, werden mit ca. 900 ml Wasser von 65°C gerührt und mit 125 g $\beta$-Mercaptoäthanol versetzt. Dann wird der Ansatz durch Zugabe von konzentrierter Natronlauge auf einen pH-Wert von 12 bis 13 gebracht und 3 Stunden bei 65° C gerührt. Man erhält eine konzentrierte, färbefertige und lagerstabile flüssige Farbstoffpräparation.

Zu einer ähnlichen Präparation gelangt man, verwendet man statt des $\beta$-Mercaptoäthanols eine etwa äquimolare Menge einer der anderen erfindungsgemäßen Mercaptoverbindungen.

### Beispiel 6

230 g Farbbase Sulphur Blue 10 C.I. 53 470, erhalten durch Schwefeln von N-[p-(Hydroxyanilino)phenyl]-sulfanilsäure nach dem Kochverfahren werden mit 1,5 l Wasser gerührt, gegebenenfalls unter Zusatz eines handelsüblichen Dispergiermittels, und mit 160 g β-Mercaptoäthanol versetzt. Dann stellt man mit konzentrierter Natronlauge den pH-Wert auf 10 bis 11 ein und rührt das Gemisch bis zur Lösung bei 60 bis 80° C, wobei der pH-Wert konstant gehalten wird.

Es wird eine färbefertige und lagerstabile flüssige Farbstoffpräparation erhalten.

### Beispiel 7

200 g der im Beispiel 5 beschriebenen flüssigen Farbstoffpärparation des Sulphur Brown 51 werden mit kaltem Wasser auf 1000 ml aufgefüllt. Mit dieser Lösung wird Baumwollgewebe foulardiert. Die Temperatur der Klotzflotte beträgt 20 bis 30°C. Das mit Farbstofflösung imprägnierte Gewebe wird 1 Minute bei 103° C gedämpft, danach gespült und mit 1 g/l Kaliumbichromat in 3 ml Essigsäure 60%ig bei 80° C oxydiert. Man erhält eine Färbung, die in Farbtiefe und Echtheiten einer solchen entspricht, die mit dem Handelsfarbstoff Immedial Lichtbraun GGL unter Verwendung von Schwefelnatrium hergestellt wird.

### Beispiel 8

Es wurden zwei Färbeflotten hergestellt, die jeweils in 1 l 80 g Sol. Sulphur Black 1 C.I. 53 186 enthielten. Der einen Färbeflotte wurden 80 g Schwefelnatrium konz. 60%ig und der anderen Färbeflotte 20 ml Natronlauge 38° Bé und 80 ml β-Mercaptoäthanol (in Form einer 47%igen wäßrigen Lösung des Natriumsalzes) zugesetzt. Dann wurden die Färbeflotten auf 80°C erwärmt und eine Stunde unter Luftabschluß bei dieser Temperatur gehalten. Danach wurde die Sulfidionenkonzentrationen in den beiden Färbeflotten analytisch bestimmt. Im Falle der mit Schwefelnatrium versetzten Färbeflotte wurden 1,15% $S^{2-}$ im Falle der mit β-Mercaptoäthanol versetzten Färbeflotte weniger als $1 \cdot 10^{-3}$% $S^{2-}$ gefunden.

**Patentansprüche**

1. Verfahren zum Färben und Bedrucken mit Schwefelfarbstoffen unter Verwendung von Mercaptoverbindungen als Reduktionsmittel, dadurch gekennzeichnet, daß als Reduktionsmittel eine Verbindung der Formel

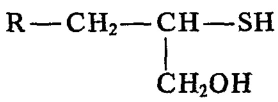
I

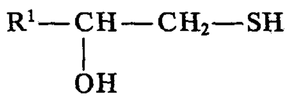
II

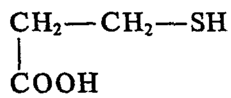
III

worin R = –H oder –OH und $R^1$ = –H, $-CH_3$ oder $-CH_2OH$ bedeuten, oder ein Alkalisalz davon, verwendet wird.

2. Verfahren nach Anspruch 1, dadurch gekennzeichnet, daß, bezogen auf das Farbstoffgewicht, das 0,2- bis 3fache des Gewichtes an Reduktionsmittel verwendet wird.

3. Verfahren nach den Ansprüchen 1 bis 2, dadurch gekennzeichnet, daß das Reduktionsmittel im Gemisch mit Natriumdithionit, Glucose, Fructose oder Invertzucker zur Anwendung kommt.

4. Verfahren nach den Ansprüchen 1 bis 3, dadurch gekennzeichnet, daß als Reduktionsmittel β-Mercaptoäthanol verwendet wird.

5. Verfahren zur Herstellung färbefertiger stabiler Schwefelfarbstoffzubereitungen, dadurch gekennzeichnet, daß ein Schwefelfarbstoff in Wasser bei pH-Werten von 9 bis 14 bis Temperaturen von 20 bis 80° C so lange mi. einer Verbindung der Formel

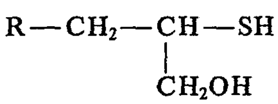
I

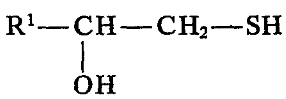
II

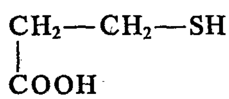
III

worin R = –H oder –OH und $R^1$ = –H, $-CH_3$ oder $-CH_2OH$ bedeutet, oder einem Alkalisalz davon behandelt wird, bis der Schwefelfarbstoff vollständig reduziert ist.

6. Verfahren nach Anspruch 5, dadurch gekennzeichnet, daß die Behandlung bei pH-Werten von 10,5 bis 12,5 erfolgt.

7. Verfahren nach den Ansprüchen 5 bis 6, dadurch gekennzeichnet, daß die Behandlung bei Temperaturen von 40 bis 80° C erfolgt.

8. Verfahren nach den Ansprüchen 5 bis 7, dadurch gekennzeichnet, daß das Reduktionsmittel im Gewichtsverhältnis Farbstoff : Reduktionsmittel = 1 : (0,1 bis 2) zur Anwendung kommt.

9. Verfahren nach den Ansprüchen 5 bis 8, dadurch gekennzeichnet, daß das Reduktionsmittel im Gewichtsverhältnis Farbstoff : Reduktionsmittel = 1 : (0,2 bis 1) zur Anwendung kommt.

10. Flüssige, färbefertige, stabile Schwefelfarbstoffzubereitung, erhalten nach dem Verfahren der Ansprüche 5 bis 9 mit einem Farbstoffgehalt von 10 bis 45%.

## Claims

1. Process for dyeing and printing with sulphur dyestuffs using mercapto compounds as reducing agent, characterised in that the reducing agent is a compound of the formula

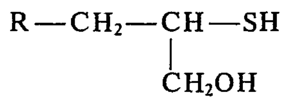 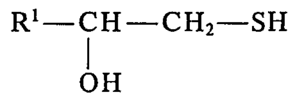 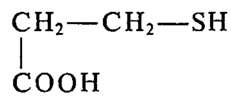

I II III

wherein R is $-H$ or $-OH$ and $R^1$ is $-H$, $-CH_3$ or $-CH_2OH$, or an alkali metal salt thereof.

2. Process according to claim 1, characterised in that the amount of reducing agent is 0.2 to 3 times the weight of dyestuff.

3. Process according to claims 1 to 2, characterised in that said reducing agent is used in a mixture with sodium dithionite, glucose, fructose or invert sugar.

4. Process according to claims 1 to 3, characterised in that $\beta$-mercaptoethanol is said reducing agent.

5. Process for the preparation of stable sulphur dyestuff formulations ready for dyeing, characterised in that a sulphur dyestuff is treated in water at a pH of 9 to 14 and at a temperature of 20 to 80° C with a compound of the formula

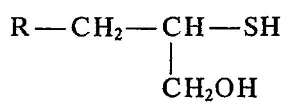 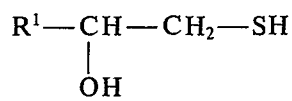 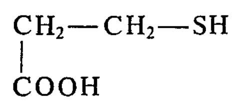

I II III

wherein R is $-H$ or $-OH$ and $R^1$ is $-H$, $-CH_3$ or $-CH_2OH$, or an alkali metal salt thereof, until the sulphur dyestuff has been completely reduced.

6. Process according to claim 5, characterised in that treatment is effected at a pH of 10.5 to 12.5.

7. Process according to claims 5 to 6, characterised in that treatment is effected at a temperature from 40 to 80° C.

8. Process according to claims 5 to 7, characterised in that the weight ratio of dyestuff to reducing agent is 1 : (0.1 to 2).

9. Process according to claims 5 to 8, characterised in that the weight ratio of dyestuff to reducing agent is 1 : (0.2 to 1).

10. Liquid, stable sulphur dyestuff formulation ready for dyeing obtained by the process according to claims 5 to 9 and having a dyestuff content of 10 to 45%.

## Revendications

1. Procédé de teinture et d'impression avec des colorants au soufre en utilisant des composés mercaptos comme réducteurs, caractérisé en ce qu'on utilise comme réducteuer un composé de formule

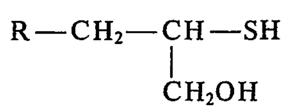 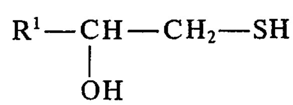 ou 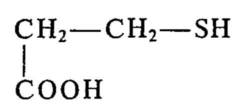

I II III

dans lesquelles R = $-H$ ou $-OH$ et $R^1$ = $-H$, $-CH_3$ ou $-CH_2OH$, ou un de ses sels alcalins.

2. Procédé suivant la revendication 1, caractérisé en ce qu'on utilise un poids de réducteur compris entre 0,2 et 3 fois le poids du colorant.

3. Procédé suivant l'une quelconque des revendications 1 et 2, caractérisé en ce que le réducteur est utilisé en mélange avec du dithionite de sodium, du glucose, du fructose ou du sucre interverti.

4. Procédé suivant l'une quelconque des revendications 1 à 3, caractérisé en ce qu'on utilise comme réducteur du $\beta$-mercapto-éthanol.

5. Procédé d'obtention de préparations de colorants au soufre stables, prêtes pour la teinture, caractérisé en ce qu'on traite un colorant au soufre dans l'eau, à un pH de 9 à 14, à une température de 20 à 80° C, avec un composé de formule

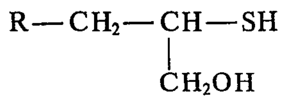
I

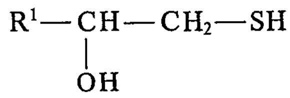
II

ou

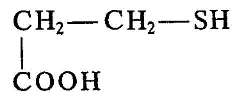
III

dans lesquelles R = $-H$ ou $-OH$ et $R^1$ = $-H$, $-CH_3$ ou $-CH_2OH$, ou par un de ses sels alcalins, jusqu'à ce que le colorant au soufre soit complètement réduit.

6. Procédé suivant la revendication 5, caractérisé en ce que le traitement est effectué à un pH de 10,5 à 12,5.

7. Procédé suivant l'une quelconque des revendications 5 et 6, caractérisé en ce que le traitement est effectué à une température de 40 à 80° C.

8. Procédé suivant l'une quelconque des revendications 5 à 7, caractérisé en ce que le réducteur est utilisé dans le rapport pondéral colorant : réducteur de 1 : (0,1 à 2).

9. Procédé suivant l'une quelconque des revendications 5 à 8, caractérisé en ce que le réducteur est utilisé dans le rapport pondéral colorant : réducteur de 1 : (0,2 à 1).

10. Préparation de colorant au soufre liquide stable et prête pour la teinture, obtenue par un procédé suivant l'une quelconque des revendications 5 à 9, ayant une teneur en colorant de 10 à 45%.